# EUROPEAN PATENT SPECIFICATION

(11) **EP 1 243 376 B1**
(45) Date of publication and mention of the grant of the patent: **16.06.2004**
(21) Application number: 01830200.0
(22) Date of filing: 21.03.2001
(51) Int. Cl.: B23Q 1/01, B23Q 1/62, B23Q 1/56

(54) **High speed machine tool, having a movable frame**
Hochgeschwindigkeitsbearbeitungswerkzeugmaschine mit einem verstellbaren Rahmen
Machine-outil d'usinage à grande vitesse avec bâti déplaçable

(43) Date of publication of application: 25.09.2002
(73) Proprietor: CE.S.I. Centro Studi Industriali di Taddei Ing. Franco e C. S.A.S., 20093 Cologno Monzese (Milano) (IT)
(72) Inventor: Repossini, Claudio, c/oCE.S.I.Centro Indust. S.A.S, 20093 Cologno Monzese (Milano) (IT)
(74) Representative: Notaro, Giancarlo

(56) References cited:
- EP-A- 0 846 523
- DE-U- 29 519 150
- FR-A- 2 715 336
- GB-A- 397 781
- US-A- 4 658 485
- PATENT ABSTRACTS OF JAPAN vol. 014, no. 416 (M-1021), 7 September 1990 (1990-09-07) & JP 02 160440 A (HONDA MOTOR CO LTD), 20 June 1990 (1990-06-20)

## Description

The present invention relates to high-speed machine tools of the type comprising:
- a fixed frame including a bench carrying a worktable, on which the workpiece is to be fixed;
- a raised cross-member structure surmounting the bench, oriented along a first axis and slidably mounted on the fixed frame along a second , horizontal axis, perpendicular to said first axis;
- a carriage slidably mounted on said cross-member structure along said first axis; and
- a slide slidably mounted on said carriage along a third axis and carrying a working head.

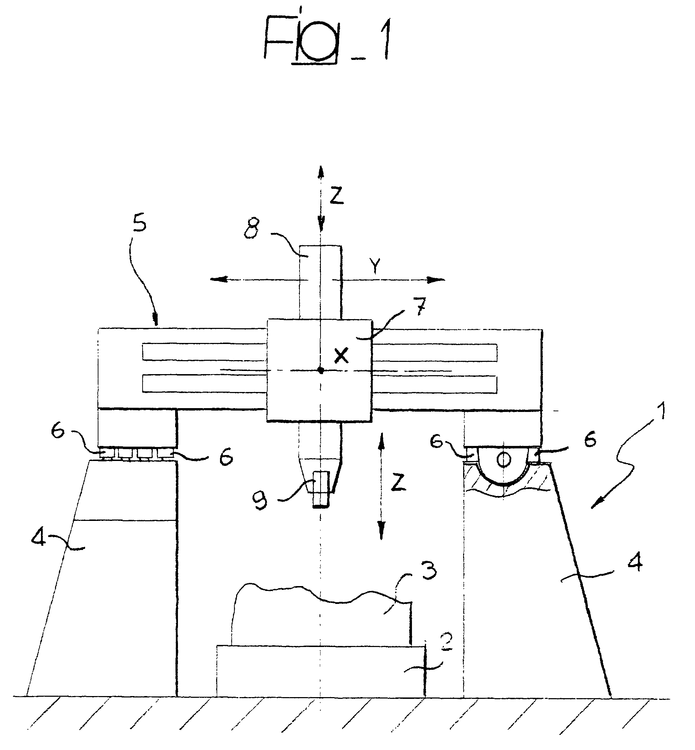

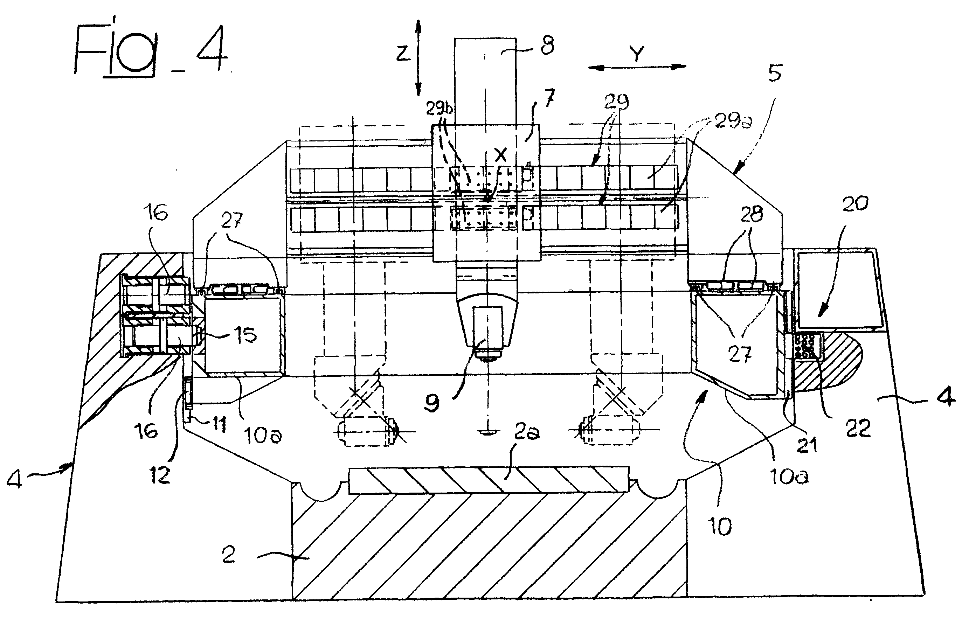

Figure 1 of the attached drawings illustrates, by way of example, a traditional machine tool of the type described above. The fixed frame of the machine is designated, in Figure 1, by the reference number 1. The aforesaid fixed frame comprises a bench 2 with a worktable on which a workpiece 3 is set, for example a metal structure designed to be used as a mould for forming bodies made of plastic material, or else as a die for processing of metal-sheet elements or any other type of workpiece requiring machining with removal of stock from its surface. The frame 1 comprises side columns 4 which serve to support and guide movement of a cross-member structure 5 which surmounts the bench 2. The cross-member structure is oriented along a first horizontal axis, indicated by Y, and has its ends slidably mounted along a second horizontal axis, indicated by X, which is perpendicular to the first axis, on guides 6 carried by the top of the columns 4. Machines are also known in which the aforesaid axes X and Y are inverted. The movement of the cross-member structure 5 is controlled by means of control systems of any known type, such as motors actuating ballscrew external thread-internal thread systems, linear electric motors, or hydraulic cylinders. Slidably mounted in the Y direction on the cross member 5 is a carriage 7 on which there is in turn slidably mounted, in a vertical direction Z, a slide or ram 8 carrying a working head 9. In operation, the movement of the cross-member structure 5 along the X axis, the movement of the carriage 7 along the Y axis, and the movement of the slide 8 along the Z axis enable displacement of the working head 9 along the aforesaid three axes in order to be able to carry out processing of the piece 3.

In recent years, there has been an increasing effort in the direction of search for solutions that enable ever faster machine tools to be built in order to increase productivity. This has led to the need to displace the working head of the machine with high accelerations and decelerations so as to bring it as fast as possible from the starting point to the arrival point of its path. The high accelerations lead in turn to additional stresses on the structure of the machine and to the risk that the moving parts of the machine may be subjected to oscillations and vibrations. Deriving from this is the need for stiffening the structures, with consequent increase in the masses in movement, which also leads to the need to use higher-powered driving motors.

A machine-tool of the type indicated in the precharacterizing portion of claim 1 is disclosed in GB-A-397 781. In this known solution an auxiliary frame is provided which has a structure, with two columns connected at the top by a cross-member. A structure of this type is not suitable for enabling the high accelerations which are required in modern high-speed machines, because of the mass of the movable structure with resulting risk of vibrations and deformations during high accelerations and decelerations and the need of high-powered. motors in order to drive the required movements at high speeds.

With regard to independent claim 20, EP 0 846 523 A discloses a high-speed machine tool comprising a fixed frame including a bench carrying a worktable on which the workpiece is to be fixed. A carriage is slidably mounted, along a vertical axis, on a structure, surmounting the bench, which is slidably mounted with respect to the fixed frame along a horizontal axis perpendicular to the vertical axis. A slide is mounted on said carriage for sliding along a further horizontal axis, perpendicular to the first horizontal axis. This slide carries a working head.

The structure, upon which the carriage is mounted, is in turn mounted on the fixed frame with the interposition of an auxiliary frame, for sliding on said auxiliary frame along said first horizontal axis. The auxiliary frame is slidably mounted on the fixed frame in the second horizontal axis direction.

The purpose of the present invention is to provide a machine tool of the type referred to at the beginning of this description, which will be able to guarantee a high operating speed and which even so will be free from the problems of undesirable oscillations or vibrations of its parts, this being achieved at the same time with a relatively simple and light structure, and hence with the possibility of using relatively low-powered driving motors.

With a view to achieving the above purpose, the subject of the present invention is a machine tool having all the characteristics referred to in claim 1, or claim 20.

In a first embodiment, the machine tool according to the first independent claim has the features that :
- the cross-member structure is slidably mounted like an overhead travelling crane along the second axis on the auxiliary frame; and
- said auxiliary frame is in turn slidably mounted on said fixed frame along a direction parallel to said third axis.

Thanks to the above characteristics, the travel of the working head along the direction of the third axis is considerably reduced, whilst the working range (understood as volume of space) has the same operating dimensions as those of the traditional architecture represented in Figure 1. In the case of the known machine illustrated in Figure 1, the working travel of the working head 9 in the direction of the vertical axis Z is relatively high. In other words, it must be possible to envisage a sliding of a relatively ample length of the slide 8 along the direction Z with respect to the carriage 7, so as to take into account the entire possible range of sizes of the pieces which the machine may find itself processing. The high value of the maximum sliding travel of the slide 8 in the known machine of Figure 1 causes, in the transient periods of movement with high acceleration, inertial yielding of the cutting edge of the tool, which limits the possibility of obtaining surfaces processed in a short time and characterized by an optimal degree of surface finish and a correct and precise reproduction of the path to be followed. Consequently, the need is particularly felt to reduce inertial yielding and the consequent oscillations in order to enable optimal utilization of the capacity for removing stock on the part of the tools dedicated to high-speed processing. Achievement of the functional technical performance of the known machine of Figure 1 is considerably hindered by the weight generated by the sizes of the very rigid and heavy structures and by the high power of the motor drives.

In the case of the present invention, the cross-member structure is not at a fixed height with respect to the workpiece, but is height-adjustable thanks to the fact that the auxiliary frame can slide in the vertical direction with respect to the fixed frame. Consequently, once the cross-member structure has been set at the desired height, the amplitude of the movement along the direction of the third axis which is required from the slide carrying the working head is sensibly reduced with respect to the known machine, and thus enables a structure of the slide (or ram) to be obtained that has contained main sections, moments of inertia, length and weights. Obviously, the benefits deriving from the implementation of a light and compact ram affect the structures of the carriage 7 and of the cross member 5, as well as the corresponding motor drives. In other words, the reduction of the travel along the Z axis enables a reduction both in the guided area of the ram in the carriage and in the distance between centres of the guides for displacement of the carriage, with consequent reduction in the dimensions and weight of the carriage and cross member. The architecture of the machine according to the invention consequently makes it possible to guarantee a high operating speed, fast accelerations, and high jerks, with a marked reduction in structural yielding and in the time of stabilization of the vibrational behaviour in the acceleration transients.

According to a variant embodiment also according to independent claim 1, the machine tool according to the invention has the features that :
- the cross-member structure is slidably mounted, along a direction parallel to the third axis, on the auxiliary frame; and
- said auxiliary frame is in turn slidably mounted, along the second axis, on the fixed frame.

In other words, in the above variant the movements of the auxiliary frame and the cross member are inverted with respect to one another, as compared to the case of the first embodiment mentioned above.

Of course, the same concept referred to above could also be transferred to a machine tool having a different architecture, in which a component equivalent to the aforesaid cross-member structure is oriented vertically, with a carriage slidably mounted on said structure and a slide slidably mounted on the carriage along a horizontal direction. Also in this case, the cross-member structure is slidably mounted on said auxiliary frame, which is in turn slidably mounted along a horizontal direction, orthogonal to the previous direction, on the bench.

Such a machine tool is disclosed in the attached independent claim 20.

In the preferred embodiment of the invention, the aforesaid auxiliary frame can be clamped in a plurality of pre-set positions along the aforesaid third axis, with respect to the fixed frame. In the case of the specific example illustrated, two different positions are provided.

Again in the case of the preferred embodiment of the invention, the fixed frame and the auxiliary frame have reference means co-operating together to provide a reference for the aforesaid operating positions of the auxiliary frame with respect to the fixed frame. In addition, the fixed frame and the auxiliary frame have clamping means co-operating together for clamping the auxiliary frame in the operating position selected with respect to the fixed frame. Displacement of the movable frame with respect to the fixed frame is controlled by control means of any known type, such as hydraulic cylinders, or else linear electric motors, or again rotary electric motors driving ballscrew external thread-internal thread systems.

Further characteristics and advantages of the invention will emerge from the ensuing description with reference to the attached drawings, which are provided purely by way of non-limiting examples and in which:
- Figure **1** is a schematic elevation of a machine tool according to the prior art;
- Figures **2** and **3** illustrate a schematic elevation of a preferred embodiment of the machine tool according to the invention in two different operating conditions; the said figures correspond to sections according to the line II-II of Figure 6;
- Figure **4** is a sectional view according to the line IV-IV of Figure 6;
- Figure **5** is a side view, partially sectioned along the line V-V of Figure 6;
- Figure **6** is a partially sectioned plan view of the machine tool of Figures 2 and 3;
- Figure **7** is a sectional view at an enlarged scale according to the line VII-VII of Figure 6;
- Figure **8** is a view at an enlarged scale of a detail of Figure 4;
- Figure **9** is a view at an enlarged scale of a detail of Figure 6;
- Figure **10** is a view at an enlarged scale of a detail of Figure 9;

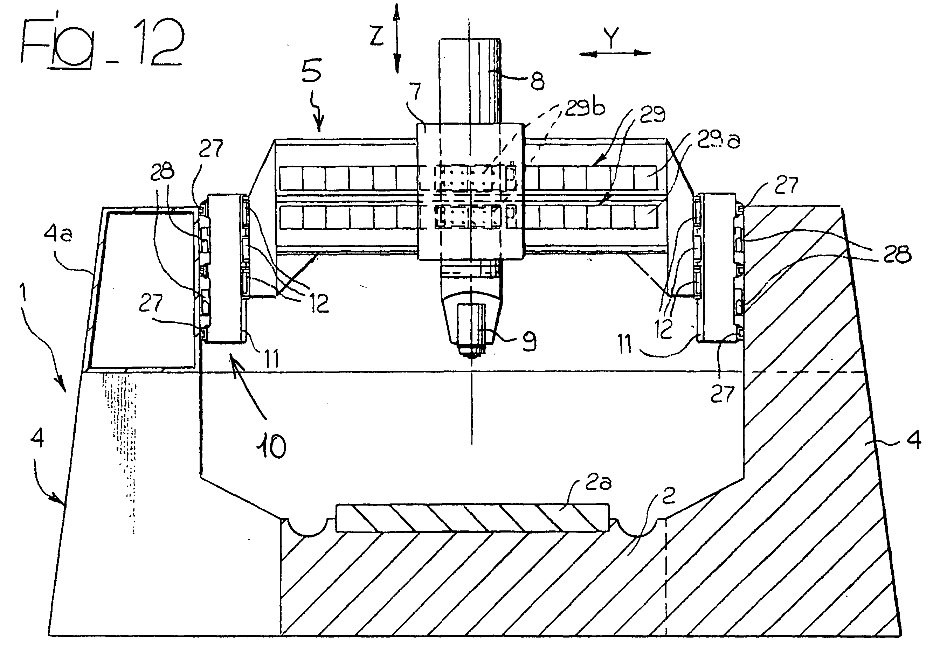

- Figure **11** is a schematic perspective view of the machine according to the invention;
- Figure **12** and **13** illustrate two different variants of Figure 2; and
- Figure **14** illustrates a further embodiment of the invention.

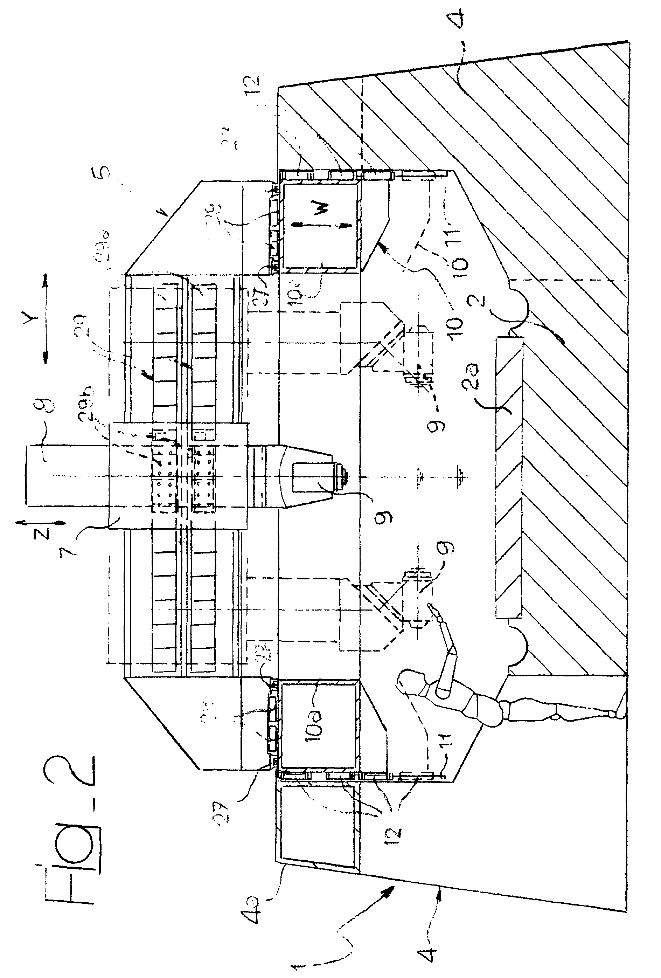

The known machine illustrated in Figure 1 has already been described previously. Figures 2-9 illustrate a preferred embodiment of a machine according to the invention. In these figures, the parts in common with Figure 1 are designated with the same reference numbers. With reference in particular to Figures 2, 5 and 6, also the machine according to the invention has a fixed frame 1 including a bench 2 having a front end, a rear end and two sides. Set along the sides of the bench 2 are two sets of two or more (three, in the case of the example illustrated) columns 4, which are joined together at the top by two longitudinal beams 4a and two cross members 4b. The structure of the aforesaid elements may be made of a single piece or, by joining a number of elements together, according to the dimensions of the machine and in particular the working range of the working head and the length of the travels of the moving parts of the machine along the three axes X, Y, Z. In the case where the said structures are made up of a number of elements, the elements can be connected together by means of any known type, such as pins and bolts engaged on connection flanges arranged on the elements in the jointing planes. Preferably, the material used for making the fixed frame 1 is chosen from among cement, polymer cement, grey iron or nodular cast iron, electrically welded steel, or a combination of a number of materials (for instance, steel, cast iron, polymer cement, resins and foams).

The bench 2 carries a worktable 2a on which the workpiece is to be fixed. The table 2a may be separate from or made of a single piece with the bench 2.

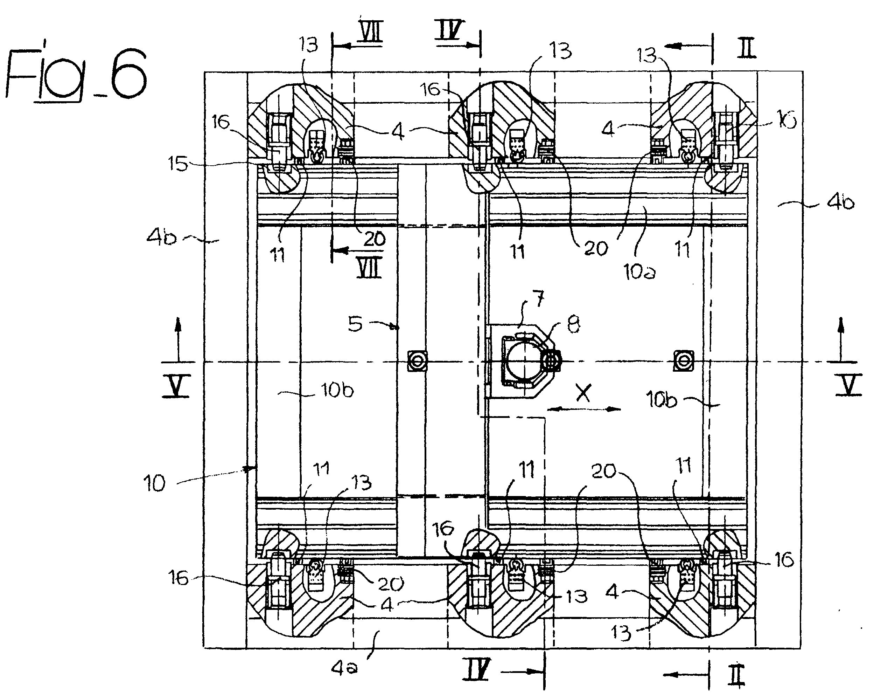

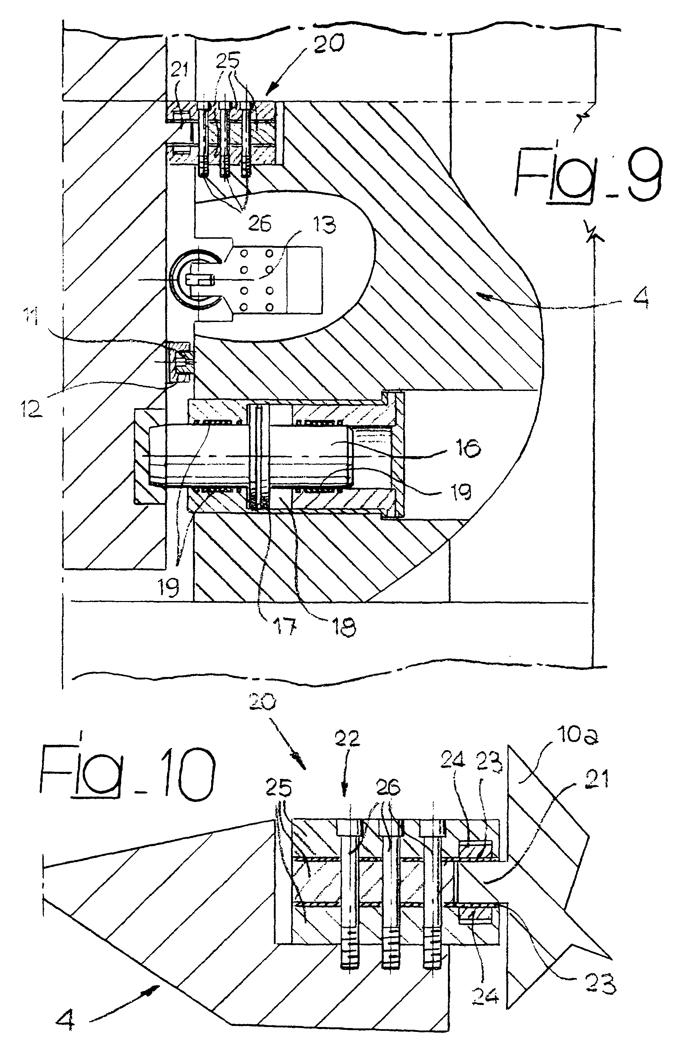

An essential characteristic of the machine according to the invention lies in the fact that it comprises an auxiliary frame 10 which is slidably mounted with respect to the fixed frame 1 along an axis W parallel to the vertical axis Z of sliding of the slide or ram 8 that carries the working head 9. In the example illustrated, the auxiliary frame 10 has a frame-like structure set in a horizontal plane, with two longitudinal beams 10a joined together at their ends by two cross members 10b. In order to guide the sliding of the auxiliary frame 10 along the direction of the axis W with respect to the fixed frame 1, the surfaces set facing one another of the two sets of side columns 4 have respective guides 11, on which pads 12 engage which are carried by the auxiliary frame 10 in an area corresponding to the external faces of its two longitudinal beams 10a (see Figures 6 and 9). In the example illustrated, each column 4 is provided with a respective guide 11 which is engaged by three pads 12 (see Figures 2 and 9) provided on the auxiliary frame 10. Again in the case of the example illustrated, each pad 12 has a substantially C-shaped conformation (see Figure 9). It is, however, evident that the slide guides 11 may be of any size, form and arrangement. Also the number of guides and their position with respect to the fixed frame 1 and mobile frame 10 can be varied with respect to what is illustrated in the annexed drawings purely by way of example.

The sliding movement of the auxiliary frame 10 with respect to the fixed frame 1 can be controlled by motor means of any known type, such as hydraulic cylinders, linear electric motors, or rotary electric motors driving ballscrew external thread-internal thread systems. In the case of the example illustrated, the motor means for displacement of the auxiliary frame 10 are constituted by hydraulic cylinders 13 (one of which is represented at an enlarged scale in Figure 7) which have their ends secured to brackets 13a, 13b respectively welded to a column 4 and to the structure of the mobile frame 10. It is in any case evident that the number of cylinders 13 and their arrangement may be any whatsoever.

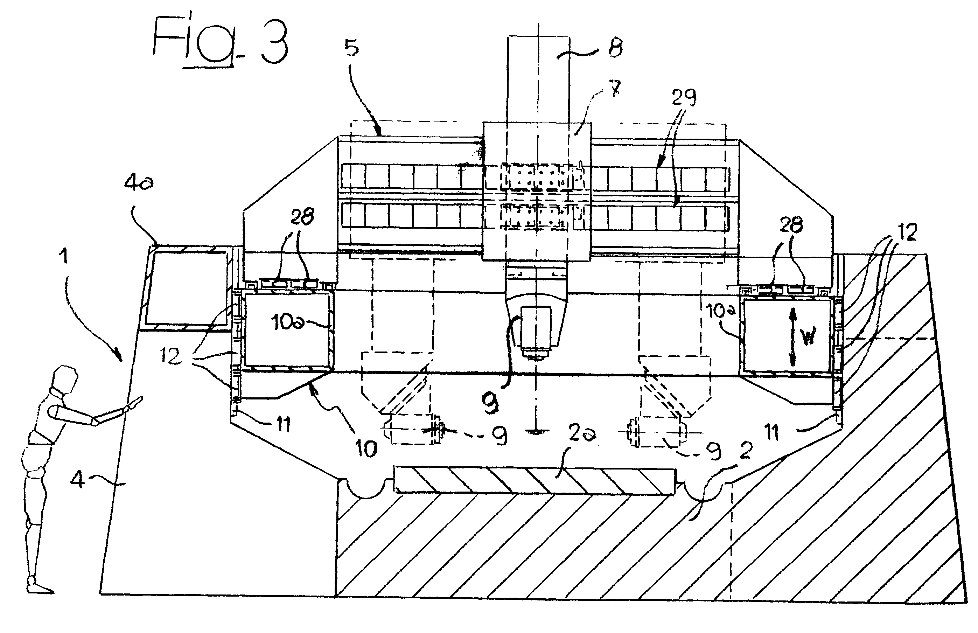

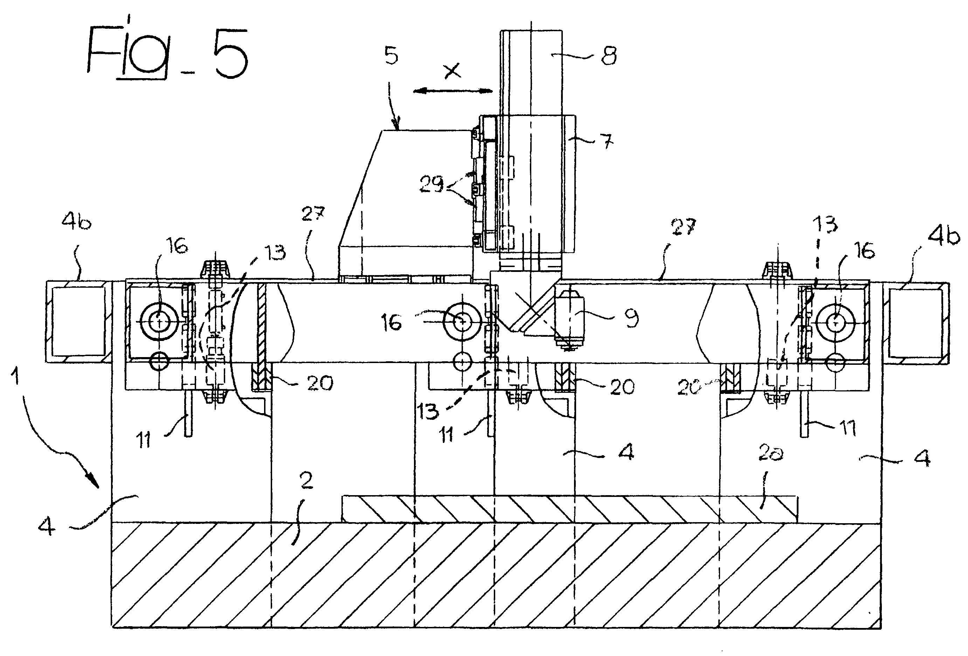

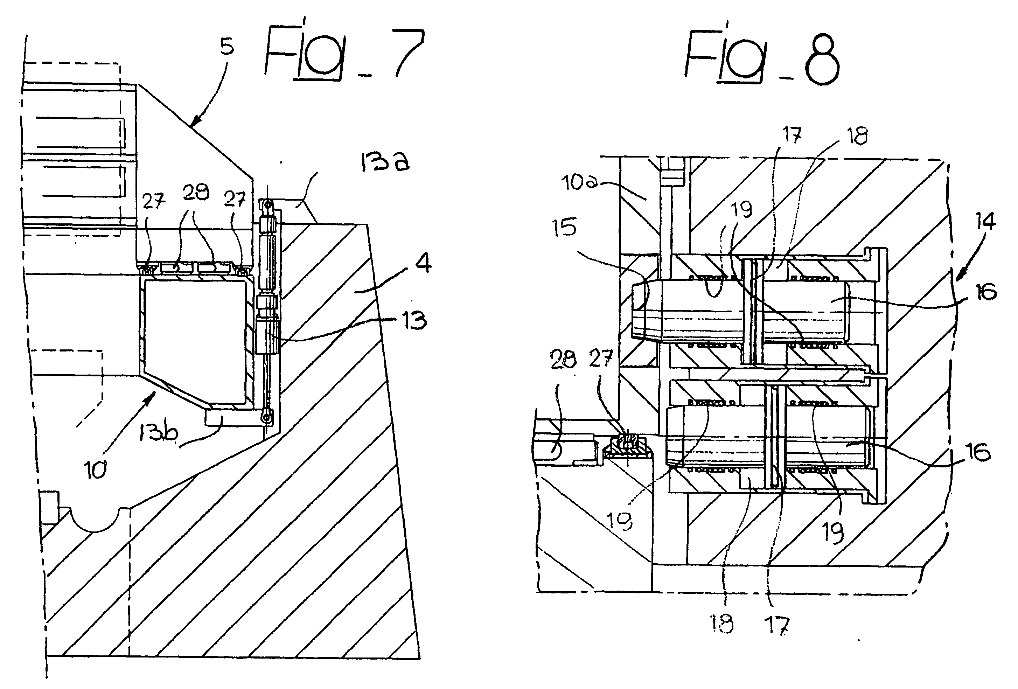

Again in the case of the example illustrated, the auxiliary frame 10 is arranged for being set in two different operating positions, set at a distance apart vertically, with respect to the fixed frame 1. It is, however, evident that it is possible to envisage any number of different operating positions of the auxiliary frame 10. In order to provide a reference for each of the two operating positions that may be selected for the moving frame 10, reference means 14 are provided (see Figures 4, 6, and 8) associated to each column 4. As may be seen in Figure 4, each of the longitudinal beams 10a of the auxiliary frame 10 has, in an area corresponding to each column 4 adjacent thereto, a seat 15 for receiving selectively a first or a second hydraulically controlled slot pin 16. As may be clearly seen in Figure 8, each of the slot pins 16 constitutes the stem of a hydraulic cylinder, the plunger 17 of which is displaceable between two end operating positions inside a chamber 18 defined within the body of the cylinder. Sliding of the slot pins 16 within the respective bodies is helped by roller guides 19. Each of the two slot pins 16 can thus be controlled between a retracted position inside the respective cylindrical body, which is in turn recessed in the structure of the respective column 4, and an extracted position, so as to engage the seat 15. Figure 2 shows the moving frame 10 in its first operating position (more raised), whilst Figure 3 shows the moving frame 10 in its second operating position (more lowered). In the former case, the reference for the position is given by the engagement of the slot pin 16 set lower down into the corresponding seat 15. This structure, as has already been said, is repeated for each of the columns 4. In order to favour the engagement of the slot pin 16 within the respective seat 15, the said pin has a conical end head, and the seat 15 also has a conical conformation, as may be clearly seen in Figure 8.

Also as far as the reference means 14 are concerned, in any case, their conformation, architecture, dimensions and arrangement, as well as the number of the slot-pin devices, can vary widely with respect to what is illustrated herein purely by way of example. As already indicated, the function of said reference means is to provide a reference for the operating position of the moving frame 10 and to guarantee the position of correct geometrical set of said moving frame 10 with respect to the fixed frame 1.

Once the moving frame 10 has been positioned in one of its two operating positions, it is clamped in said position by activation of clamping means 20 associated to each of the columns 4.

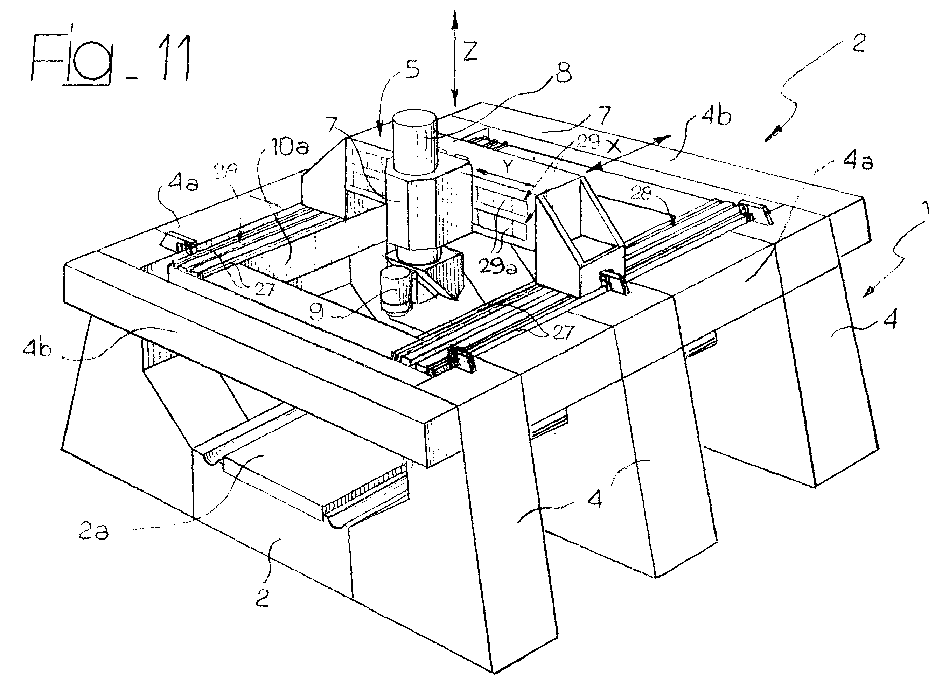

With reference to Figures 4, 6, 9 and 10, each clamping means 20 comprises a clamp designed to engage a rib 21 carried by the external side wall of each longitudinal beam 10a of the moving frame 10 in an area corresponding to each column 4 of the fixed frame 1. The clamp, designated as a whole by 22, comprises a pair of thin strips 23, made of a material with a high coefficient of friction, which are flexurally deformed following upon the thrust exerted on them by two hydraulic actuators 24 in such a way as to be pressed against the two sides of the rib 21. In the embodiment illustrated, the thin strips 23 are blocked between three steel plates 25 screwed together by means of aligned rows of screws. Each of the hydraulic actuators 24 comprises a disk acting as a plunger in a chamber defined by one of the two outer plates 25.

Also as regards the clamping devices 20, however, their shape, architecture, dimensions and number may vary widely with respect to the example illustrated. The function of the aforesaid clamping devices is to connect rigidly the moving frame 10 to the fixed frame 1 once the moving frame has been positioned.

With reference again to Figure 2, the moving frame 10 supports slidingly along the X direction the displacement of a cross-member structure 5 altogether similar to that illustrated in Figure 1. In the present case, however, the cross-member structure is slidably mounted, like an overhead travelling crane, not directly on the columns 4, but rather on the moving frame 10. Consequently, by adjusting the vertical position of the moving frame 10 it is possible to adjust accordingly the height of the entire cross-member structure 5.

In the example illustrated, each end of the cross-member structure 5 is slidably mounted on a respective longitudinal beam 10a of the frame 10 by means of pads which engage guides 27 carried by the moving frame 10. Again in the case of the example illustrated, control of the displacement of the cross-member structure 5 along the X axis is entrusted to a pair of linear electric motors 28, each of which has one part carrying the windings, which is rigidly connected to the cross-member structure 5, and one part carrying the permanent magnets, which is connected to the moving. frame 10, or vice versa. As already indicated, movement of the cross-member structure 5 may in any case be obtained by control means of any known type, such as conventional electric motors driving ballscrew external thread-internal thread systems, hydraulic cylinders, etc. In addition, control means can be provided for controlling said motor means in terms of speed and/or position with the aid of sensing and measuring means. Again in a way similar to what is illustrated in Figure 1, the cross-member structure 5 slidably supports, along the Y direction, a carriage 7 which, in the case of the example illustrated, is driven by means of two linear electric motors 29, each of which has an element - designated by 29a in Figure 4 - connected to the cross-member structure 5, and an element 29b connected to the structure of the carriage 7 in such a way as to cooperate with the latter. Finally, as in the case of Figure 1, the carriage 7 slidably supports, along a vertical direction Z, a slide or ram 8, the bottom end of which carries a working head 9 of any known type.

During operation, the height position of the cross-member structure 5 is adjusted according to the working range within which the working head 9 is to operate. This results in the advantage that the maximum travel that the slide 8 is called upon to cover in any operating condition is considerably lower than the one which must, instead, be envisaged in the case of the known machine illustrated in Figure 1. Consequently, the machine tool according to the invention is able to guarantee extremely high processing times without, however, involving excessive stresses on the moving and fixed structures, with the consequent risk of vibrations and oscillations. In this way, the additional advantage is achieved of being able to envisage lighter mobile structures (slide, carriage, cross member), which can be controlled by not excessively powerful motor means.

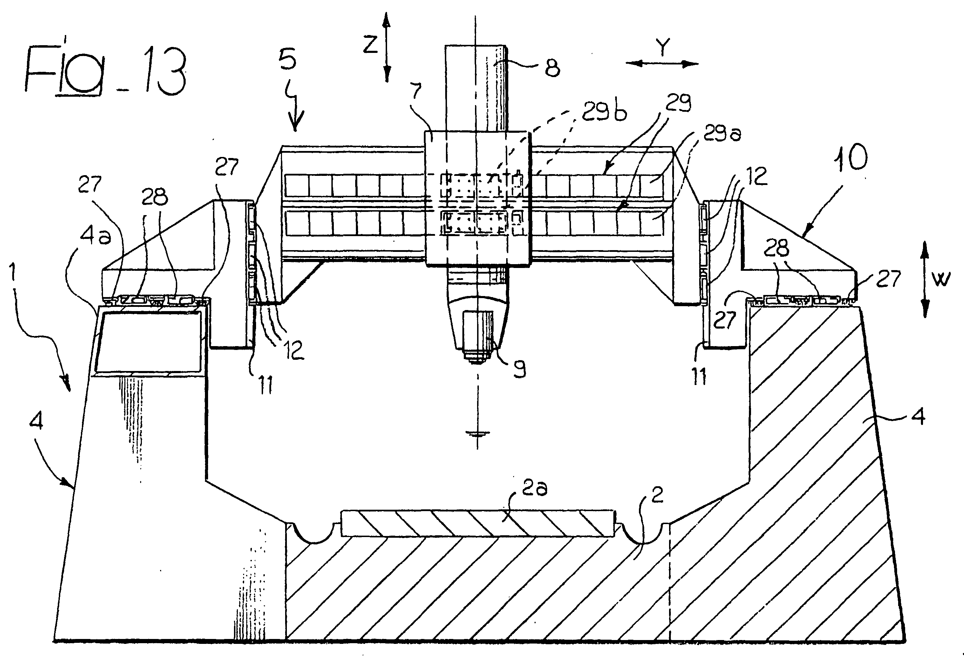

Figures 12 and 13 illustrate two possible variants of Figure 2. In both variants, the movements of the cross member and of the auxiliary frame are inverted. In the present case, in fact, the auxiliary frame is mobile according to the horizontal axis X with respect to the bench, whilst the cross member is mobile vertically with respect to the auxiliary frame. In the case of Figure 12, the auxiliary frame is made up of two slides slidably mounted in the direction of the horizontal axis X on the internal surfaces set facing one another of the side columns that rise vertically from the bench, whilst the cross member 5 is slidably mounted, along a direction parallel to the vertical axis (Z axis), on guides carried by the internal surfaces set facing one another of the aforesaid two slides. In the case of Figure 13, instead, the auxiliary frame 10 is made up of two slides slidably mounted in the direction of the horizontal axis X on the top surface of the fixed structure of the machine, and the cross-member structure 5 is slidably mounted, along a direction parallel to said vertical axis (Z axis), on guides carried by the internal surfaces set facing one another of the aforesaid two slides.

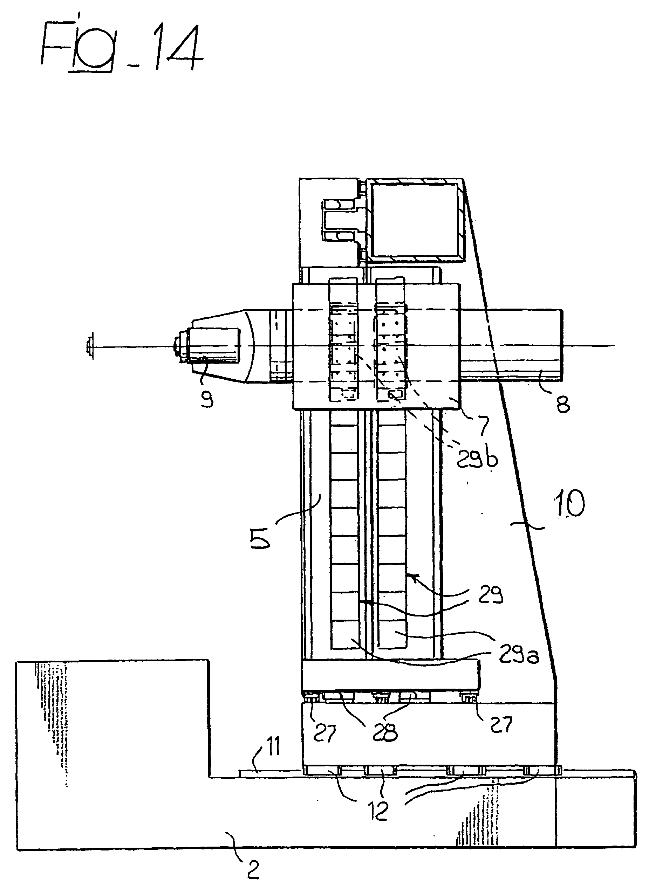

As already indicated at the beginning of the present description, it would also be possible to envisage a machine tool in which the cross-member structure 5 is oriented according to a vertical axis and is guided along a horizontal axis on a moving frame which can slide along an axis, also horizontal, on a fixed frame. In this case, the carriage that slides on the cross-member structure would be mobile vertically, and the slide carrying the working head would be able to slide with respect to the carriage along the horizontal direction parallel to the direction of displacement of the moving frame. This solution is illustrated in Figure 14. With reference to this figure, the auxiliary frame 10 slides on the fixed frame along the direction W. The vertical cross member 5 is guided, above and below, by the moving frame 10 along a direction perpendicular to the plane of the figure. The carriage 7 slides vertically on the cross member 5, and the ram 8 slides horizontally on the carriage.

In the variants described above, the devices for controlling the movements, the reference devices for the operating positions of the auxiliary frame, and the clamping devices for clamping the latter may be altogether similar to those seen in the case of the preferred embodiment of the invention.

Of course, without prejudice to the principle of the invention, the details of construction and the embodiments may vary widely with respect to what is described and illustrated herein purely by way of example, without thereby departing from the scope of the present invention.

## Claims

1. A high-speed machine tool comprising:
- a fixed frame (1) including a bench (2) carrying a worktable (2a), on which the workpiece is to be fixed;
- a raised cross-member structure (5) surmounting the bench (2), oriented along a first axis (Y) which is horizontal and slidably mounted like an overhead travelling crane on the fixed frame (1) along a second axis (X), which is also horizontal but perpendicular to said first axis (Y);
- a carriage (7) slidably mounted on said cross-member structure (5) along said first axis (Y); and
- a slide (8) slidably mounted on said carriage (7) along a third axis (Z) in a vertical direction, and carrying a working head (9);
- wherein the cross-member structure (5) is mounted on said fixed frame (1) with the interposition of an auxiliary frame (10);
- said auxiliary frame (10) being slidably mounted on said fixed frame (1) along a first direction parallel to one between said second axis (X) and said third axis (Z); and
- said cross-member structure (5) is slidably mounted on said auxiliary frame (10) along a second direction parallel to the other between said second axis (X) and said third axis (z),
**characterised in that**:
- the fixed frame includes columns (4) on two sides of the bench,
- the auxiliary frame comprises two longitudinal beams (10a) extending parallel to said second axis (X) and both lying in a horizontal plane,
- the two longitudinal beams (10a) of the auxiliary frame (10) are slidably mounted along said first direction on said columns (4) of the fixed frame (1),
- the cross-member structure (5) has each of its ends slidably mounted along said second direction on a respective one of said longitudinal beams.

2. The machine tool according to Claim 1, **characterized in that**:
- said cross-member structure (5) is slidably mounted like an overhead travelling crane along said second axis (X) on said auxiliary frame (10) ; and
- said auxiliary frame (10) is in turn slidably mounted on said fixed frame (1) along a direction (W) parallel to said third axis (Z).

3. The machine tool according to Claim 1, **characterized in that**:
- said cross-member structure (5) is slidably mounted, along a direction (W) parallel to said third axis (Z), on said auxiliary frame (10); and
- said auxiliary frame (10) is in turn slidably mounted, along said second axis (X), on said fixed frame (1).

4. The machine tool according to any one of the preceding claims, **characterized in that** said auxiliary frame (10) can be clamped in a plurality of predetermined different positions along its direction of sliding with respect to the fixed frame (1).

5. The machine tool according to Claim 4, **characterized in that** said fixed frame (1) and said auxiliary frame (10) have reference means (14) co-operating together, which provide a reference for the different operating positions of the auxiliary frame (10) with respect to the fixed frame (1).

6. The machine tool according to Claim 4, **characterized in that** said fixed frame (1) and said auxiliary frame (10) have clamping means (20) co-operating together for clamping the auxiliary frame (10) in the operating position selected with respect to the fixed frame (1).

7. The machine tool according to any one of the preceding claims, **characterized in that** the fixed frame (1) comprises:
- a bench (2) having a front end, a rear end and two sides;
- a plurality of columns (4) rising vertically on two sides of the bench (2);
- two longitudinal beams (4a) joining together the tops of the columns (4) on each side of the bench; and
- two cross members (4b) joining together the ends of the longitudinal beams (4a).

8. The machine tool according to Claim 7, **characterized in that** the auxiliary frame (10) has a frame-like structure set in a horizontal plane between two sets of columns (4) of the fixed frame (1), and comprises two longitudinal beams (10a) that are parallel to one another and set at a distance apart and are connected together at the ends of the two cross members (10b), said longitudinal beams (10a) being provided on their outer sides with pads (12) that are slidably mounted on guides (11) provided on the aforesaid columns (4) of the fixed frame (1).

9. The machine tool according to Claim 8, **characterized in that** the cross-member structure (5) has ends guided on top of the two longitudinal beams (10a) of the auxiliary frame (10).

10. The machine tool according to Claim 5, **characterized in that** the aforesaid reference means (14) comprise a plurality of slot pins (16) carried by the fixed frame (1) and designed to engage selectively a seat (15) associated to the mobile frame (10) so as to provide a reference for the selected operating position of the mobile frame (10).

11. The machine tool according to Claim 6, **characterized in that** the aforesaid clamping means (210) comprise a clamping device carried by the fixed frame (1) and designed to grip on a rib (21) carried by the mobile frame (10).

12. The machine tool according to Claim 10, **characterized in that** each slot pin (16) constitutes the stem of a hydraulic cylinder provided on each of the columns (4) of the fixed frame (1).

13. The machine tool according to Claim 11, **characterized in that** the aforesaid clamping device comprises a pair of thin strips (23), made of a material with a high coefficient of friction, which can be tightened against the two sides of the respective rib (21) following upon the thrust exerted by the two hydraulic cylinders (24).

14. The machine tool according to Claim 13, **characterized in that** the two strips (23) are tightened between three rigid plates (25), and **in that** the two hydraulic cylinders (24) comprise two plungers that can move in two chambers defined by two end plates (25) of the pack of plates for tightening the strips (23).

15. The machine tool according to Claim 1, **characterized in that** the sliding movement of the mobile frame (10) is controllable by motor means chosen from among linear electric motors, rotary electric motors associated to ballscrew external thread-internal thread systems, and hydraulic cylinders.

16. The machine tool according to Claim 15, **characterized in that** control means are provided for controlling said motor means in terms of speed and/or position with the aid of sensing and measuring means.

17. The machine tool according to Claim 1, **characterized in that** the movement of the cross-member structure (5) with respect to the moving frame (10) is controllable by motor means chosen from among linear electric motors, rotary electric motors associated to ballscrew external thread-internal thread systems, and hydraulic cylinders.

18. The machine tool according to Claim 1, **characterized in that**:
- said longitudinal beams (10a) of said auxiliary frame (10) define two slides slidably mounted in the direction of the second horizontal axis (X) on the internal surfaces set facing one another of the columns (4) of the fixed structure (1) that raise vertically from the bench; and
- said cross-member structure (5) is slidably mounted, along a direction (W) parallel to said third vertical axis (Z), on guides carried by the internal surfaces set facing one another of the aforesaid two slides.

19. The machine tool according to Claim 1, **characterized in that**:
- said longitudinal beams (10a) of said auxiliary frame (10) define two slides slidably mounted in the direction of the second horizontal axis (X) on the top surface of the columns (4) of fixed structure of the machine; and
- said cross-member structure (5) is slidably mounted, along a direction (W) parallel to said third vertical axis (Z), on guides carried by the internal surfaces set facing one another of the aforesaid two slides.

20. A high-speed machine tool, comprising:
- a fixed frame (1) including a bench (2) carrying a worktable (2a), on which the workpiece is to be fixed;
- a raised cross-member structure (5) surmounting the bench (2), oriented along a first axis, which is vertical, and slidably mounted with respect to the fixed frame (1) along a second axis, which is horizontal, and perpendicular to said first axis;
- a carriage (7) slidably mounted on said cross-member structure (5) along said first axis; and
- a slide (8) slidably mounted on said carriage (7) along a third axis, which is horizontal, and carrying a working head;
in which moreover:
- the cross-member structure (5) is mounted on said fixed frame (1) with the interposition of an auxiliary frame (10);
- said cross-member structure (5) is slidably mounted on said auxiliary frame (10) along said second axis; and
- said auxiliary frame (10) is slidably mounted on said fixed frame (1) in a horizontal direction perpendicular to said second axis and parallel to said third axis,
wherein said auxiliary frame (10) includes spaced apart upper and lower portions which guide respective ends of the cross-member structure (5) from above and below.

## Patentansprüche

1. Hochgeschwindigkeits-Werkzeugmaschine umfassend:
- einen ortsfesten Rahmen (1) mit einem Gestell (2), welches einen Arbeitstisch (2a) trägt, auf dem das Werkstück befestigt wird;
- eine aufragende Brückenstruktur (5), welche das Gestell (2) überspannt und die in einer ersten Achse (Y) ausgerichtet ist, die horizontal liegt und die wie ein Laufkran gleitbar auf dem ortsfesten Rahmen (1) entlang einer zweiten Achse (X) gelagert ist, die ebenfalls horizontal liegt, aber rechtwinklig zur ersten Achse (Y);
- einen Schlitten (7), der gleitbar auf der genannten Brückenstruktur (5) entlang der genannten ersten Achse (Y) gelagert ist; und
- einen Revolverschlitten (8), der auf dem genannten Schlitten (7) entlang einer dritten Achse (Z) gleitbar gelagert ist in einer vertikalen Richtung und der einen Arbeitskopf (9) trägt;
- wobei die Brückenstruktur (5) auf dem genannten ortsfesten Rahmen (1) unter Zwischenfügung eines Hilfsrahmens (10) gelagert ist;
- wobei der Hilfsrahmen (10) gleitbar gelagert ist, auf dem genannten ortsfesten Rahmen (1) entlang einer ersten Richtung, die parallel liegt zu einer der Achsen aus dem von der zweiten Achse (X) und der dritten Achse (Z) gebildeten Achsenpaar und wobei
- die genannte Brückenstruktur auf dem Hilfsrahmen (10) gleitbar gelagert ist entlang einer zweiten Richtung, die parallel liegt zu der anderen Achse aus dem von der zweiten Achse (X) und der dritten Achse (Z) gebildeten Achsenpaar;
**dadurch gekennzeichnet, dass**
- der ortsfesten Rahmen (1) Seitensäulen (4) auf zwei Seiten des Gestells (2) einschließt,
- der Hilfsrahmen (10) zwei Hilfslängsträger (10a) umfasst, die sich parallel zu der genannten zweiten Achse (X) erstrecken und beide in einer Horizontalebene liegen,
- die zwei Hilfslängsträger (10a) des Hilfsrahmens (10) auf den Seitensäulen (4) des ortsfesten Rahmens (1) entlang der genannten ersten Richtung gleitbar gelagert sind,
- die Brückenstruktur (5) mit jedem ihrer Enden entlang der genannten zweiten Richtung gleitbar auf jeweils einem der genannten Hilfslängsträger (10a) gelagert ist.

2. Hochgeschwindigkeits-Werkzeugmaschine nach Anspruch 1, **dadurch gekennzeichnet, dass**
- die genannte Brückenstruktur (5) wie ein Laufkran auf dem genannten Hilfsrahmen (10) entlang der zweiten Achse (X) gleitbar gelagert ist; und
- der genannte Hilfsrahmen (10) wiederum gleitbar gelagert ist auf dem ortsfesten Rahmen (1) entlang einer Richtung (W) die parallel zu der genannten dritten Achse (Z) liegt.

3. Hochgeschwindigkeits-Werkzeugmaschine nach Anspruch 1, **dadurch gekennzeichnet, dass**
- die genannte Brückenstruktur (5) auf dem genannten Hilfsrahmen (10) entlang einer Richtung (W) parallel zur genannten dritten Achse (Z) gleitbar gelagert ist; und
- der genannte Hilfsrahmen (10) seinerseits auf dem genannten ortsfesten Rahmen (1) entlang der genannten zweiten Achse (X) gleitbar gelagert ist.

4. Hochgeschwindigkeits-Werkzeugmaschine nach einem der vorhergehenden Ansprüche, **dadurch gekennzeichnet, dass** der genannte Hilfsrahmen (10) in einer Mehrzahl von vorherbestimmten unterschiedlichen Positionen entlang seiner Gleitrichtung bezüglich des ortsfesten Rahmens (1) festklemmbar ist.

5. Hochgeschwindigkeits-Werkzeugmaschine nach Anspruch 4, **dadurch gekennzeichnet, dass** der genannte ortsfesten Rahmen (1) und der Hilfsrahmen (10) zusammenwirkende Bezugsmittel (14) aufweisen, die einen Bezug für die unterschiedlichen Betriebspositionen des Hilfsrahmens (10) bezüglich des ortsfesten Rahmens (1) ergeben.

6. Hochgeschwindigkeits-Werkzeugsmaschine nach Anspruch 4, **dadurch gekennzeichnet, dass** der ortsfesten Rahmen (1) und der genannte Hilfsrahmen (10) Klemmmittel (20) aufweisen, die miteinander zusammenwirken, um den Hilfsrahmen (10) in der ausgewählten Betriebsposition bezüglich des ortsfesten Rahmens (1) festzuklemmen.

7. Hochgeschwindigkeits-Werkzeugmaschine nach einem der vorhergehenden Ansprüche, **dadurch gekennzeichnet, dass** der ortsfesten Rahmen (1) umfasst:
- ein Gestell (2) mit einem Vorderende, einem Rückende und zwei Seiten;
- eine Mehrzahl von Seitensäulen (4), die senkrecht auf beiden Seiten des Gestells (2) aufragen;
- zwei Längsträger (4a), die die beiden oberen Enden der Seitensäulen (4) auf jeder Seite des Gestells verbinden; und
- zwei Querträger (4b), die die Enden der Längsträger (4a) miteinander verbinden.

8. Hochgeschwindigkeits-Werkzeugmaschine nach Anspruch 7, **dadurch gekennzeichnet, dass** der Hilfsrahmen eine rahmenartige Struktur aufweist, die in einer Horizontalebene zwischen zwei Gruppen von Seitensäulen (4) des ortsfesten Rahmens (1) liegt, und zwei Hilfslängsträger (10a), umfasst die zueinander parallel liegen und mit Abstand voneinander angeordnet sind, und mit einander an den Enden von zwei Hilfsquerträgern (10b) verbunden sind, wobei die genannten Hilfslängsträger (10a) an ihren Außenseiten mit Druckunterlagen (12) versehen sind, die in Führungen (11) gleitbar gelagert sind, welche auf den vorgenannten Seitensäulen (4) des ortsfesten Rahmens (1) vorgesehen sind.

9. Hochgeschwindigkeits-Werkzeugmaschine nach Anspruch 8, **dadurch gekennzeichnet, dass** die Brückenstruktur (5) Enden aufweist, die oben auf den zwei Hilfslängsträgem (10a) des Hilfsrahmens (10) geführt sind.

10. Hochgeschwindigkeits-Werkzeugmaschine nach Anspruch 5, **dadurch gekennzeichnet, dass** die vorgenannten Bezugsmittel (14) eine Mehrzahl von Einsteckstiften (16) aufweisen, die am ortsfesten Rahmen (1) gelagert sind, und so angepasst sind, dass sie wahlweise in einen dem beweglichen Hilfsrahmen (10) zugeordneten Sitz (15) eingreifen und so einen Bezug für die ausgewählte Betriebsposition des beweglichen Hilfsrahmens (10) gewähren.

11. Hochgeschwindigkeits-Werkzeugmaschine nach Anspruch 6, **dadurch gekennzeichnet, dass** die vorgenannten Klemmmittel (20) eine Klemmvorrichtung umfassen, die vom ortsfesten Rahmen (1) getragen wird und die so ausgestaltet ist, dass sie eine vom beweglichen Hilfsrahmen 10 getragene Rippe (21) fest greifen kann.

12. Hochgeschwindigkeits-Werkzeugmaschine nach Anspruch 10, **dadurch gekennzeichnet, dass** jeder Einsteckstift (16) den Schaft eines Hydraulikzylinders bildet, der auf jeder der Seitensäulen (4) des Ortsfestensrahmens ( 1 ) vorgesehen ist.

13. Hochgeschwindigkeits-Werkzeugmaschine nach Anspruch 11, **dadurch gekennzeichnet, dass** die vorgenannte Klemmvorrichtung ein Paar dünner Bänder (23) umfasst, die aus einem Material mit hohem Reibungskoeffizienten hergestellt sind und die gegen die beiden Seiten, der jeweiligen Rippe (21) gedrückt werden können in Folge der Schubkraft, die von zwei Hydraulikzylindern (24) ausgeübt wird.

14. Hochgeschwindigkeits-Werkzeugmaschine nach Anspruch 13, **dadurch gekennzeichnet, dass** die zwei Bänder (23) zwischen drei steifen Platten (25) gehalten sind und dass die zwei Hydraulikzylinder (24) zwei Kolben umfassen, die sich in zwei Kammern bewegen können, wobei die Kammern durch zwei der äußeren Platten (25) der Plattenpackung aus den drei Platten zur Halterung der Bänder (23) gebildet werden.

15. Hochgeschwindigkeits-Werkzeugmaschine nach Anspruch 1, **dadurch gekennzeichnet, dass** die gleitende Bewegung des bewegbaren Hilfsrahmens (10) durch Motormittel gesteuert wird, die entweder lineare Elektromotoren sind, oder Rotationselektromotoren zusammen mit äußeren oder inneren Kugelumlaufspindeln oder hydraulischen Zylindern.

16. Hochgeschwindigkeits-Werkzeugmaschine nach Anspruch 15, **dadurch gekennzeichnet, dass** Steuermittel vorgesehen sind zur Steuerung der Motormittel bezüglich der Geschwindigkeit und/oder der Position mit Hilfe von Sensor- und Messmitteln.

17. Hochgeschwindigkeits-Werkzeugmaschine nach Anspruch 1, **dadurch gekennzeichnet, dass** die Bewegung der Brückenstruktur (5) bezüglich des beweglichen Hilfsrahmens (10) durch Motormittel steuerbar ist die entweder lineare Elektromotoren oder Rotationselektromotoren zusammen mit äußeren oder inneren Kugelumlaufspindeln sind oder hydraulische Zylinder.

18. Hochgeschwindigkeits-Werkzeugmaschine nach Anspruch 1, **dadurch gekennzeichnet, dass**
- die genannten Hilfslängsträger (10a) des Hilfsrahmens (10) zwei Schlitten definieren, die gleitbar beweglich in Richtung der zweiten Horizontalachse (X) an den inneren Oberflächen der Seitensäulen (4) des ortsfesten Rahmens (1), die sich von dem Gestell (2) nach oben erstrecken, gelagert sind; und
- dass die Brückenstruktur (5) gleitbar gelagert ist in einer Richtung (W) parallel zu der besagten dritten vertikalen Achse (Z) auf Führungen, die von den inneren sich gegenüberliegenden Oberflächen der vorgenannten zwei Schlitten getragen werden.

19. Hochgeschwindigkeits-Werkzeugmaschine nach Anspruch 1, **dadurch gekennzeichnet, dass**
- die genannten Hilfslängsträger (10a) des Hilfsrahmens zwei Schlitten ausbilden, die in Richtung der zweiten Horizontalachse (X) auf der oberen Oberfläche der Seitensäulen (4) des ortsfesten Rahmens der Maschine gelagert sind; und
- die besagte Brückenstruktur (5) gleitbar gelagert ist in einer Richtung (W) parallel zu der genannten dritten vertikalen Achse (Z) auf Führungen, die an den sich gegenüberliegenden Oberflächen der vorgenannten zwei Schlitten angeordnet sind.

20. Hochgeschwindigkeits-Werkzeugmaschine umfassend:
- einen ortsfesten Rahmen (1) mit einem Gestell (2), welches einen Arbeitstisch (2a) trägt, auf dem das Werkstück befestigt wird;
- eine aufragende Brückenstruktur (5), die das Gestell (2) überspannt und entlang einer ersten Achse ausgerichtet ist, die vertikal liegt und die gleitbar gelagert ist bezüglich des ortsfesten Rahmens (1) entlang einer zweiten Achse, die horizontal liegt und aber senkrecht zur ersten Achse ausgerichtet ist;
- einen Schlitten (7), der auf der Brückestruktur (5) gleitbar gelagert ist entlang der genannten ersten Achse; und
- einen Revolverschlitten (8), der gleitbar gelagert ist auf dem genannten Schlitten (7) entlang einer dritten Achse, die horizontal liegt und der einen Arbeitskopf (9) trägt;
wobei darüber hinaus
- die Brückenstruktur (5) auf dem ortsfesten Rahmen (1) durch Zwischenfügung eines Hilfsrahmens (10) gelagert ist;
- die Brückenstruktur (5) gleitbar gelagert ist auf dem genannten Hilfsrahmen (10) entlang der genannten zweiten Achse
- der Hilfsrahmen (10) gleitbar gelagert ist auf dem genannten ortsfesten Rahmen (1) in einer Horizontaltrichtung senkrecht zur zweiten Achse und parallel zu der genannten dritten Achse,
- wobei der genannte Hilfsrahmen (10) voneinander beabstandete obere und untere Teile aufweist, die jeweilige Enden der Brückenstruktur (5) von unten und oben führen.

## Revendications

1. Machine outil à grande vitesse comprenant :
un châssis fixe (1) comprenant un banc (2) supportant une table support de pièce (2a) sur laquelle la pièce à usiner doit être fixée ;
une structure de traverse (5) rehaussée surmontant le banc (2), orientée le long d'un premier axe (Y) qui est horizontal et montée de manière coulissante comme une grue à pont roulant sur le châssis fixe (1) le long d'un deuxième axe (X) qui est également horizontal, mais perpendiculaire audit premier axe (Y) ;
un chariot (7) monté de manière coulissante sur ladite structure de traverse (5) le long dudit premier axe (Y) ; et
un coulisseau (8) monté de manière coulissante sur ledit chariot (7) le long d'un troisième axe (Z) dans une direction verticale, et supportant une tête de travail (9) ;
dans laquelle la structure de traverse (5) est montée sur ledit châssis fixe (1) avec l'interposition d'un châssis auxiliaire (10) ;
ledit châssis auxiliaire (10) étant monté de manière coulissante sur ledit châssis fixe (1) le long d'une première direction parallèle à l'un entre ledit deuxième axe (X) et ledit troisième axe (Z) ; et
ladite structure de traverse (5) est montée de manière coulissante sur ledit châssis auxiliaire (10) de long d'une seconde direction parallèle à l'autre entre ledit deuxième axe (X) et ledit troisième axe (Z),
**caractérisée en ce que** :
le châssis fixe comprend des colonnes (4) des deux côtés du banc,
le châssis auxiliaire comprend deux poutres (10a) longitudinales s'étendant parallèlement audit deuxième axe (X) et se trouvant toutes les deux dans un plan horizontal,
les deux poutres (10a) longitudinales du châssis auxiliaire (10) sont montées de manière coulissante le long de ladite première direction sur lesdites colonnes (4) du châssis fixe (1),
la structure de traverse (5) a chacune de ses extrémités montées de manière coulissante le long de ladite seconde direction sur l'une respective, desdites poutres longitudinales.

2. Machine outil selon la revendication 1, **caractérisée en ce que** :
ladite structure de traverse (5) est montée de manière coulissante comme une grue à pont roulant le long dudit deuxième axe (X) sur ledit châssis auxiliaire (10) ; et
ledit châssis auxiliaire (10) est à son tour monté de manière coulissante sur ledit châssis fixe (1) le long d'une direction (W) parallèle audit troisième axe (Z).

3. Machine outil selon la revendication 1, **caractérisée en ce que** :
ladite structure de traverse (5) est montée de manière coulissante, le long d'une direction (W) parallèle audit troisième axe (Z), sur ledit châssis auxiliaire (10) ; et
ledit châssis auxiliaire (10) est à son tour monté de manière coulissante, le long dudit deuxième axe (X), sur ledit châssis fixe (1).

4. Machine outil selon l'une quelconque des revendications précédentes, **caractérisée en ce que** ledit châssis auxiliaire (10) peut être bloqué dans une pluralité de différentes positions prédéterminées le long de sa direction de coulissement par rapport au châssis fixe (1).

5. Machine outil selon la revendication 4, **caractérisée en ce que** ledit châssis fixe (1) et ledit châssis auxiliaire (10) ont des moyens de référence (14) coopérant ensemble, qui fournissent une référence pour les différentes positions de fonctionnement du châssis auxiliaire (10) par rapport au châssis fixe (1).

6. Machine outil selon la revendication 4, **caractérisée en ce que** ledit châssis fixe (1) et ledit châssis auxiliaire (10) ont des moyens de blocage (20) coopérant ensemble pour bloquer le châssis auxiliaire (10) dans la position de fonctionnement choisie par rapport au châssis fixe (1).

7. Machine outil selon l'une quelconque des précédentes revendications, **caractérisée en ce que** le châssis fixe (1) comprend :
un banc (2) doté d'une extrémité avant, d'une extrémité arrière et de deux côtés ;
une pluralité de colonnes (4) s'élevant verticalement des deux côtés du banc (2) ;
deux poutres (4a) longitudinales assemblant les sommets des colonnes (4) de chaque côté du banc ; et
deux traverses (4b) assemblant les extrémités des poutres (4a) longitudinales.

8. Machine outil selon la revendication 7, **caractérisée en ce que** le châssis auxiliaire (10) possède une structure en forme de châssis déterminée dans un plan horizontal entre deux ensembles de colonnes (4) du châssis fixe (1), et comprend deux poutres (10a) longitudinales qui sont parallèles entre elles et réglées à une certaine distance et sont raccordées ensemble au niveau des extrémités des deux traverses (10b), lesdites poutres (10a) longitudinales étant munies sur leurs côtés externes de patins (12) qui sont montés de manière coulissante sur des guides (11) prévus sur les colonnes (4) précitées du châssis fixe (1).

9. Machine outil selon la revendication 8, **caractérisée en ce que** la structure de traverse (5) possède des extrémités guidées sur le sommet des deux poutres (10a) longitudinales du châssis auxiliaire (10).

10. Machine outil selon la revendication 5, **caractérisée en ce que** les moyens de référence (14) mentionnés précédemment comprennent une pluralité de broches fendues (16) supportées par le châssis fixe (1) et conçues pour mettre en prise de manière sélective un siège (15) associé au châssis mobile (10) afin de fournir une référence pour la position de fonctionnement choisie du châssis mobile (10).

11. Machine outil selon la revendication 6, **caractérisée en ce que** les moyens de blocage (210) mentionnés précédemment comprennent un dispositif de blocage supporté par le châssis fixe (1) et conçu pour saisir une nervure (21) supportée par le châssis mobile (10).

12. Machine outil selon la revendication 10, **caractérisée en ce que** chaque broche fendue (16) constitue la tige d'un vérin hydraulique prévu sur chacune des colonnes (4) du châssis fixe (1).

13. Machine outil selon la revendication 11, **caractérisée en ce que** le dispositif de blocage mentionné précédemment comprend une paire de bandes (23) minces, réalisées à partir d'un matériau avec un coefficient de frottement élevé, qui peuvent être serrée contre les deux côtés de la nervure (21) respective suite à la poussée exercée par les deux vérins hydrauliques (24).

14. Machine outil selon la revendication 13, **caractérisée en ce que** les deux bandes (23) sont serrées entre trois plaques (25) rigides, et **en ce que** les deux vérins hydrauliques (24) comprennent deux pistons qui peuvent se déplacer dans deux chambres définies par deux plaques d'extrémité (25) de l'ensemble de plaques destiné à serrer les bandes (23).

15. Machine outil selon la revendication 1, **caractérisée en ce que** le mouvement coulissant du châssis mobile (10) peut être commandé par des moyens de moteurs choisis parmi des moteurs électriques linéaires, des moteurs électriques rotatifs associés à des systèmes de filetage interne - filetage externe de vis billes, et des vérins hydrauliques.

16. Machine outil selon la revendication 15, **caractérisée en ce que** des moyens de commande sont prévus pour commander lesdits moyens moteurs en termes de vitesse et/ou de position à l'aide de moyens de détection et de mesure.

17. Machine outil selon la revendication 1, **caractérisée en ce que** le mouvement de la structure de traverse (5) par rapport au châssis mobile (10) peut être commandé par des moyens moteurs choisis parmi des moteurs électriques linéaires, des moteurs électriques rotatifs associés à des systèmes de filetage interne - filetage externe de vis à billes, et des vérins hydrauliques.

18. Machine outil selon la revendication 1, **caractérisée en ce que** :
lesdites poutres (10a) longitudinales dudit châssis auxiliaire (10) définissent deux coulisseaux montés de manière coulissante dans la direction du deuxième axe horizontal (X) sur l'ensemble de surfaces internes orientées les unes en face des autres, des colonnes (4) de la structure fixe (1) qui se dressent verticalement à partir du banc ; et
ladite structure de traverse (5) est montée de manière coulissante, le long d'une direction (W) parallèle audit troisième axe vertical (Z), sur des guides supportés par l'ensemble de surfaces internes orientées les unes en face des autres des deux coulisseaux mentionnés précédemment.

19. Machine outil selon la revendication 1, **caractérisée en ce que** :
lesdites poutres (10a) longitudinales dudit châssis auxiliaire définissent deux coulisseaux montés de manière coulissante dans la direction du deuxième axe horizontal (X) sur la surface supérieure des colonnes (4) de la structure fixe de la machine ; et
ladite structure de traverse (5) est montée de manière coulissante le long d'une direction (W) parallèle audit troisième axe vertical (Z), ; sur des guides supportés par l'ensemble de surfaces internes orientées les unes en face des autres des deux coulisseaux mentionnés précédemment.

20. Machine outil à grande vitesse, comprenant :
un châssis fixe (1) comprenant un banc (2) supportant une table support de pièce (2a), sur laquelle la pièce à usiner doit être fixée ;
une structure de traverse (5) élevée surmontant le banc (2), orientée le long d'un premier axe, qui est vertical, et montée de manière coulissante par rapport au châssis fixe (1) le long d'un deuxième axe, qui est horizontal, et perpendiculaire audit premier axe ;
un chariot (7) monté de manière coulissante sur ladite structure de traverse (5) le long dudit premier axe ; et
un coulisseau (8) monté de manière coulissante sur ledit chariot (7) le long d'un troisième axe, qui est horizontal, et supportant une tête de travail ;
de plus, dans laquelle :
la structure de traverse (5) est montée sur ledit châssis fixe (1) avec l'interposition d'un châssis auxiliaire (10) ;
ladite structure de traverse (5) est montée de manière coulissante sur ledit châssis auxiliaire (10) le long dudit second axe ; et
ledit châssis auxiliaire (10) est monté de manière coulissante sur ledit châssis fixe (1) dans une direction horizontale perpendiculaire audit second axe et parallèle audit troisième axe,
dans lequel ledit châssis auxiliaire (10) comprend des parties supérieure et inférieure espacées l'une de l'autre qui guident les extrémités respectives de la structure de traverse (5) par dessus et par dessous.
